# EUROPEAN PATENT SPECIFICATION

(11) **EP 3 677 991 B1**
(45) Date of publication and mention of the grant of the patent: **21.04.2021**
(21) Application number: 19219256.5
(22) Date of filing: 23.12.2019
(51) Int. Cl.: G06F 1/3287, G06F 1/3206, G06F 1/3234, G10L 15/28, G06F 1/3215, G06F 1/3293, G10L 15/08

(54) **APPARATUS AND METHOD FOR TRANSITION FROM LOW POWER ALWAYS LISTENING MODE TO HIGH POWER SPEECH RECOGNITION MODE**
VORRICHTUNG UND VERFAHREN ZUM ÜBERGANG VON EINEM NIEDRIGLEISTUNGS-DAUEREINSCHALTMODUS ZU EINEM HOCHLEISTUNGS-SPRACHERKENNUNGSMODUS
DISPOSITIF ET PROCÉDÉ POUR LA TRANSITION D'UN MODE TOUJOURS EN ÉCOUTE À FAIBLE PUISSANCE À UN MODE DE RECONNAISSANCE DE LA PAROLE À HAUTE PUISSANCE

(30) Priority: 03.01.2019 KR 20190000938
(43) Date of publication of application: 08.07.2020
(73) Proprietor: Samsung Electronics Co., Ltd., Gyeonggi-do 16677 (KR)
(72) Inventor: PARK, Jongjin, 16677 Gyeonggi-do (KR); KIM, Shina, 16677 Gyeonggi-do (KR); LEE, Wonjae, 16677 Gyeonggi-do (KR); KIM, Minsup, 16677 Gyeonggi-do (KR)
(74) Representative: Walaski, Jan Filip

(56) References cited:
- EP-A1- 3 057 094
- WO-A1-2018/135753
- US-A1- 2013 031 388
- US-A1- 2017 155 378

## Description

### BACKGROUND

### 1. Field

The disclosure relates to an electronic apparatus and a controlling method thereof and for example, to an electronic apparatus that performs speech recognition and a controlling method thereof.

### 2. Description of Related Art

Recently, many electronic apparatuses have been equipped with a speech recognition function. The electronic apparatuses may analyze the intent included in the spoken voice of a user and perform an operation corresponding to the voice command.

An electronic apparatus of the prior art always supplies power to components related to speech recognition in order to detect a spoken voice of a user and perform speech recognition. Alternatively, the prior art electronic apparatus may have a separate space for storing a spoken voice of a user for a time required until the components related to speech recognition are activated. In this case, the electronic apparatus always supplies power to the storage space.

Therefore, there is a problem that power consumption of the electronic apparatus increases. In particular, if the electronic apparatus is a battery-based portable device such as a remote controller, there is a problem that the battery must be frequently replaced or recharged as power consumption increases.

Accordingly, there is a need for a technology to minimize and/or reduce standby power while performing speech recognition regarding a user's spoken voice. The following documents are considered useful to understand the background of the invention. The application WO2018/135753A1 discloses a speech recognition system implemented with a first processor operating in a low-power mode, detecting a wake-up word and activating upon detection a second processor for performing speech recognition. The application EP3057094A1 discloses an electronic device having a main processor activated following the detection of a wake-up word. A storage module provides an operating system for booting up the electronic device. The application US2017/155378A1 discloses a multi-stage speech recognition system including a power management circuit having a processor and memory having a firmware code. The application US2013/031388A1 discloses processing a wake-up signal to restore previous state values stored in a memory before entering an hibernation mode.

### SUMMARY

Embodiments of the disclosure relate to an electronic apparatus that may shorten a time required to activate a speech recognition function and a controlling method thereof.

An electronic apparatus according to an example embodiment includes a microphone, a first processor operatively coupled to the microphone and configured to maintain an active state in a low power mode, and a second processor configured to maintain an inactive state in the low power mode, wherein the first processor, based on sensing a sound signal in a specific frequency band through the microphone in the low power mode, is configured to control the electronic apparatus to transmit a trigger signal to the second processor to activate the second processor, wherein the second processor includes a memory configured to receive power in the low power mode, the second processor configured to be activated based on data stored in the memory according to the trigger signal, and to perform speech recognition regarding the sound signal received from the microphone.

The memory may be a volatile memory, the second processor may include a circuit for supplying power to the memory in the inactive state, and the circuit may supply power to the memory to maintain data stored in the memory while the second processor is in an inactive state.

The data stored in the memory may include booting data used to convert the second processor to be in an active state.

The apparatus may further include a controller connected to the first processor and the second processor, and the controller, based on receiving the trigger signal, may be configured to control the electronic apparatus to transmit a signal to activate the second processor to the second processor.

The controller may control the electronic apparatus to supply power to the memory in the low power mode.

A sound signal in the specific frequency band may be a sound signal in a 100Hz to 500Hz band.

The microphone may be implemented as one of a piezoelectric microphone or a crystal microphone.

The apparatus may further include a storage configured to store a noise extraction algorithm for performing noise filtering and echo canceling, and the second processor may be configured to perform the speech recognition after extracting a noise of the sound signal using the noise extraction algorithm.

The apparatus may include a communication interface including a circuit, and the electronic apparatus may include a remote controller configured to control an external device, and the second processor may be configured to control the communication interface to transmit a command obtained based on the speech recognition to the external device.

The apparatus may further include a communication interface including a circuit, and the second processor, based on identifying that the sound signal includes a trigger word, may be configured to enter a speech recognition mode and to control the communication interface to transmit a received sound signal to an external server that performs the speech recognition.

A method of controlling an electronic apparatus including a microphone, a first processor operatively coupled to the microphone and configured to maintain an active state in a low power mode of the electronic apparatus, and a second processor configured to maintain an inactive state in the low power mode according to an example embodiment, the method including transmitting a trigger signal to the second processor to activate the second processor based on sensing a sound signal in a specific frequency band through the microphone in the low power mode, activating the second processor based on data stored in a memory provided in the second processor according to the trigger signal, and performing speech recognition regarding the sound signal received from the microphone through the second processor, wherein the memory is supplied with power in a low power mode of the electronic apparatus.

The memory may be a volatile memory, and the second processor may include a circuit for supplying power to the memory in the inactive state, and the method may further include supplying power to the memory to maintain data stored in the memory while the second processor is in an inactive state through the circuit.

The data stored in the memory may include booting data used to convert the second processor to be in an active state.

The transmitting the trigger signal to the second processor may include, based on receiving the trigger signal through a controller connected to the first processor and the second processor, transmitting a signal to activate the second processor to the second processor.

The method may include supplying power to the memory through the controller in the low power mode.

A sound signal in the specific frequency band may be a sound signal in a 100Hz to 500Hz band.

The microphone may be implemented as one of a piezoelectric microphone or a crystal microphone.

The electronic apparatus may include a noise extraction algorithm for performing noise filtering and echo canceling, and the performing speech recognition may include performing the speech recognition after extracting a noise of the sound signal using the noise extraction algorithm.

The electronic apparatus may include a remote controller configured to control an external device remotely, and the method may include transmitting a command obtained based on the speech recognition to the external device based on the speech recognition.

The method may include, based on identifying that the sound signal includes a trigger word, entering a speech recognition mode, and transmitting a received sound signal to an external server that performs the speech recognition.

According to the various example embodiments, the electronic apparatus, based on a voice being sensed, may activate a speech recognition function quickly while minimizing and/or reducing standby power. Therefore, the power consumption of the electronic apparatus can be reduced.

### BRIEF DESCRIPTION OF THE DRAWINGS

The above and other aspects, features and advantages of certain embodiments of the disclosure will be more apparent from the following detailed description, taken in conjunction with the accompanying drawings, in which:
FIG. 1 is a diagram illustrating an example electronic apparatus that performs speech recognition according to an embodiment;
FIG. 2 is a block diagram illustrating an example configuration of an example electronic apparatus according to an embodiment;
FIG. 3 is a block diagram illustrating an example configuration of an example electronic apparatus according to an embodiment;
FIG. 4 is a diagram illustrating an example low power mode according to an embodiment;
FIG. 5 is a diagram illustrating an example in which a memory is supplied with power according to an embodiment;
FIG. 6 is a diagram illustrating an example electronic apparatus according to an embodiment;
FIG. 7 is a diagram illustrating an example electronic apparatus that performs communication with an external device according to an embodiment; and
FIG. 8 is a flowchart illustrating an example method of controlling an electronic apparatus according to an embodiment.

### DETAILED DESCRIPTION

The present disclosure will be described in greater detail below with reference to the accompanying drawings.

Terms used in the present disclosure are selected as general terminologies currently widely used in consideration of the configuration and functions of the present disclosure, but can be different depending on intention of those skilled in the art, a precedent, appearance of new technologies, and the like. Further, in specific cases, terms may be arbitrarily selected. In this case, the meaning of the terms will be described in the description of the corresponding embodiments. Accordingly, the terms used in the description should not necessarily be construed as simple names of the terms, but be defined based on meanings of the terms and overall contents of the present disclosure.

In the present application, the terms "include", "may include", "comprise", and "may comprise" designate the presence of the corresponding features (e.g., numbers, functions, operations or components such as parts), but do not exclude the presence or possibility of addition of one or more other features.

In the description, the term "at least one of A or/and B" may include all possible combinations of the items that are enumerated together. For example, the term "at least one of A or/and B" includes (1) including at least one A, (2) including at least one B, or (3) including both at least one A and at least one B.

The term such as "first" and "second" used in various example embodiments may be used to reference various elements regardless of an order and/or importance of the corresponding elements, and does not limit the corresponding elements.

If it is described that a certain element (e.g., first element) is "operatively or communicatively coupled with/to" or is "connected to" another element (e.g., second element), it should be understood that the certain element may be connected to the other element directly or through still another element (e.g., third element).

Singular forms are intended to include plural forms unless the context clearly indicates otherwise. In the present disclosure, the terms "include" and "comprise" designate the presence of features, numbers, steps, operations, components, elements, or a combination thereof that are described in the disclosure, but do not exclude the presence or possibility of addition of one or more other features, numbers, steps, operations, components, elements, or any combination thereof.

In the present disclosure, a 'module' or a 'unit' performs at least one function or operation and may be implemented by hardware or software or a combination of the hardware and the software. In addition, a plurality of 'modules' or a plurality of 'units' may be integrated into at least one processor (not illustrated) except for 'modules' or 'units' that should be realized in a specific hardware.

In the present disclosure, the term "user" may refer to a person who uses an electronic apparatus or an apparatus (e.g., an artificial intelligence (AI) electronic apparatus) that uses the electronic apparatus.

Hereinafter, various example embodiments will be described in greater detail with reference to the accompanying drawings.

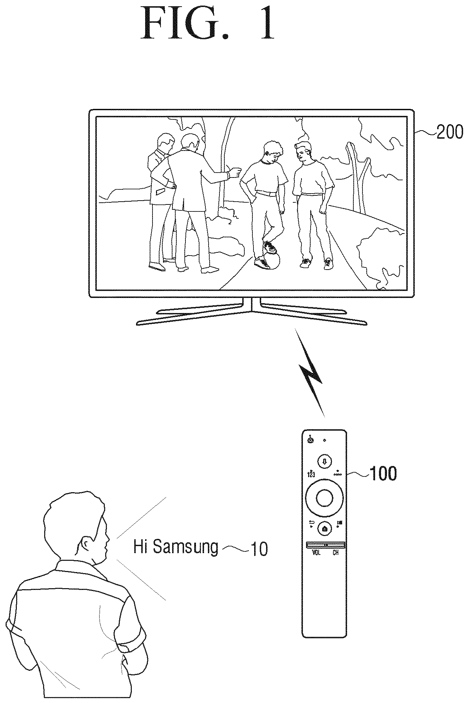

FIG. 1 is a diagram illustrating an example electronic apparatus that performs speech recognition according to an embodiment.

Referring to FIG. 1, an electronic apparatus 100 may sense a spoken voice and perform speech recognition.

In FIG. 1, the electronic apparatus 100 is illustrated as a remote controller, but this is only an example and the disclosure is not limited thereto. The electronic apparatus 100 may be implemented in various forms. The electronic apparatus according to various example embodiments may include, for example, and without limitation, at least one of a smartphone, tablet PC, mobile phone, video phone, e-book reader, desktop PC, laptop PC, netbook computer, workstation, server, PDA, portable multimedia player (PMP), MP₃ player, medical device, camera, a wearable device, or the like. The wearable device may include, for example, and without limitation, at least one of an accessory type device (for example, a watch, a ring, a bracelet, an ankle bracelet, a necklace, glasses, a contact lens, or a head-mounted device (HMD)), a fabric- or clothing-mounted device (for example, electronic apparels), a body-mounted device (for example, a skin pad, tattoos, etc.), an implantable circuit, or the like. In other example embodiments, the electronic apparatus may include, for example, and without limitation, at least one of TVs, digital video disc (DVD) players, audios, refrigerators, air conditioners, cleaners, ovens, microwave ovens, washing machines, air cleaners, set-top boxes, home automation control panels, security control panels, media boxes (for example, Samsung HomeSync™, Apple TV™, or Google TV™), game consoles (for example, Xbox™ and PlayStation™), electronic dictionaries, electronic keys, camcorders, electronic picture frames, or the like.

In other embodiments, the electronic apparatus may include, for example, and without limitation, at least one of various medical devices (for example, various portable medical measuring devices (such as a blood glucose meter, a heart rate meter, a blood pressure meter, a body temperature meter, or the like), a magnetic resonance angiography (MRA), a magnetic resonance imaging (MRI), a computed tomography (CT), a photographing device, an ultrasonic device, or the like), a navigation device, a global navigation satellite system (GNSS), an event data recorder (EDR), a flight data recorder (FDR), an automobile infotainment device, a marine electronic equipment (for example, a marine navigation device, a gyro compass, or the like), avionics, a security device, an automobile head unit, an industrial or household robot, a drone, an automatic teller's machine of a financial institute, a point of sales (POS) of a shop, Internet of things (IoT) devices (for example, a light bulb, various sensors, a sprinkler system, a fire alarm, a thermostat, a street light, a toaster, an exercise equipment, a hot water tank, a heater, a boiler, and the like), or the like. For example, the electronic apparatus 100 according to an embodiment may be implemented as various types of electronic apparatuses which have a microphone (not illustrated) and sense and receive a sound and a user's spoken voice through the microphone.

Referring to FIG. 1, the electronic apparatus 100 according to an embodiment may, for example, be implemented as a remote controller for controlling an external device 200.

The electronic apparatus 100 may have a microphone (not illustrated), and sense a sound signal through the microphone. The electronic apparatus 100 may perform speech recognition based on the sensed sound signal.

Referring to FIG. 1, a non-limiting example is provided in which the electronic apparatus 100 senses a sound signal 10 according to a user's spoken voice, but it will be understood that the disclosure is not limited thereto. If the electronic apparatus 100 identifies that the sound signal is included in a specific frequency band according to the utterance, the electronic apparatus 100 may enter a normal mode. The normal mode may, for example, be the state of entering a mode for performing speech recognition (e.g., the state where components of the electronic apparatus 100 related to speech recognition enters a normal mode from a standby mode, or the state where power is not supplied to the components of the electronic apparatus 100 related to speech recognition is changed to the state where power is supplied to the components). The standby mode and the state where power is not supplied to the components of the electronic apparatus 100 related to speech recognition may, for example, be referred to as a low power mode. Hereinafter, the above state will be referred to as a low power mode for ease of explanation. The low power mode does not refer to a state in which not power is supplied to all components of the electronic apparatus 100, but may refer, for example, to a state in which no power is supplied to components for performing speech recognition (e.g., Digital Signal Processing (DSP) chip that processes a sound signal) based on the sensed sound signal 10 in the electronic apparatus 100.

If the sound signal 10 is sensed, the electronic apparatus 100 according to an embodiment may activate components related to speech recognition and perform speech recognition regarding the sensed sound signal. The electronic apparatus 100 may operate in a low power mode by maintaining components related to the speech recognition in a low power mode prior to sensing the sound signal 10. The electronic apparatus 100 may, for example, be supplied from a device (e.g., a battery) that supplies power to the electronic apparatus 100 with relatively low power in the low power mode compared to the normal mode.

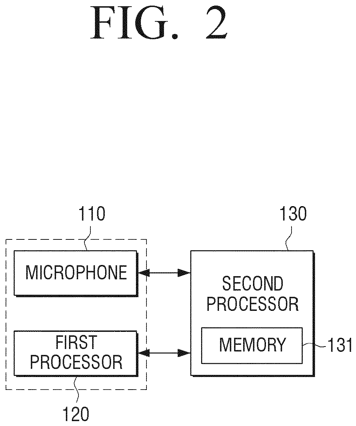

FIG. 2 is a block diagram illustrating an example configuration of an example electronic apparatus according to an embodiment.

Referring to FIG. 2, the electronic apparatus 100 includes a microphone 110, a first processor (e.g., including processing circuitry) 120, a second processor (e.g., including processing circuitry) 130 and a memory 131 provided on the second processor 130.

The microphone 110 may include a component for collecting sound signals. The microphone 110 may be configured to collect a spoken voice or other sound of a user, convert a sound signal to an electrical signal, and transmit the converted electrical signal to the second processor 130.

The microphone 110 according to an embodiment may be integrally formed with an upper side, a front direction, a side direction, or the like of the electronic apparatus 100. The microphone 110 may include various components such as, for example, and without limitation, a microphone for collecting a user voice in an analog form, an AMP circuit for amplifying the collected user voices to a predetermined gain value, an A/D conversion circuit for sampling the amplified user voices and converting the same into a digital signal, a filter circuit for removing noise from the converted digital signal, etc.

For example, the microphone 110 according to an embodiment may include the first processor 120.

The first processor 120 may include various processing circuitry and controls the overall operations of the electronic apparatus 100.

The first processor 120 may, for example, and without limitation, be implemented as a digital signal processor (DSP) for processing digital signals, a microprocessor, a Time controller (TCON), or the like. However, this is only an example, and the first processor 120 is not limited thereto. The first processor 120 may include, for example, and without limitation, at least one or more of central processing unit (CPU), micro controller unit (MCU), micro processing unit (MPU), controller, application processor (AP), graphics-processing unit (GPU), a communication processor (CP), ARM processor, or the like, or may be defined as the corresponding term. In addition, the processor 130 may be implemented as System on Chip (SoC) or large scale integration (LSI), or may be implemented in the form of Field Programmable gate array (FPGA). Further, the first processor 120 may be implemented as an integrated chip (IC) and the like. The first processor 120 may, for example, be implemented inside the microphone 110, or maybe implemented as a separate component from the microphone 110.

If the first processor 120 senses the sound signal 10 in a specific frequency band through the microphone 110, the first processor 120 according to an embodiment may transmit a trigger signal to the second processor 130.

The sound signal 10 of a specific frequency band may be the sound signal in, for example, a 100Hz to 500Hz band. For instance, the basic speech frequency band of a male may be 100Hz to 150Hz, and the basic speech frequency band of a female may be 200Hz to 250Hz. The first processor 120 according to an embodiment may identify whether the sound signal belongs to a specific frequency band (e.g., 100Hz to 500Hz) in order to identify whether the sound signal 10 sensed through the microphone 110 is the sound signal 10 according to the speech of a person. Here, the specific frequency band of 100Hz to 500Hz is only an example, and is not limited thereto. The specific frequency band may be set in various ways according to the manufacturing purpose of a manufacturer, user setting, firmware update, etc.

The microphone 110 and the first processor 120 according to an embodiment may maintain an active state in the low power mode of the electronic apparatus 100, and the second processor 130 may maintain an inactive state.

According to an embodiment, the trigger signal that the first processor 120 transmits to the second processor 130 may be a signal to convert the second processor 130 from an inactive state to an active state. The active state of the second processor 130 maybe a state where power is supplied to the second processor 130 and the second processor 130 is capable of performing speech recognition.

The second processor 130 according to an embodiment may perform a booting or a booting up operation based on the trigger signal received from the first processor 120. Based on the booting operation being completed, the second processor 130 may perform speech recognition regarding the sound signal 10 sensed from the microphone 110. The sound signal 10 sensed from the microphone 110 may not be stored in a separate storage space (e.g., a memory) while the booting operation of the second processor 130 is completed, but may be transmitted to the second processor 130. Thus, there is a need to perform the booting operation of the second processor 130 quickly.

The second processor 130 may include various processing circuitry and may control the overall operations related to speech recognition regarding the sound signal 10.

The second processor 130 may, for example, and without limitation, be implemented as a digital signal processor (DSP) for processing digital signals, a microprocessor, a Time controller (TCON), or the like. However, this is only an example, and the first processor 120 is not limited thereto. The first processor 120 may include, for example, and without limitation, at least one or more of central processing unit (CPU), micro controller unit (MCU), micro processing unit (MPU), controller, application processor (AP), graphics-processing unit (GPU) or communication processor (CP), ARM processor, or the like, or may be defined as the corresponding term. In addition, the processor 130 may be implemented as System on Chip (SoC) or large scale integration (LSI), or may be implemented in the form of Field Programmable gate array (FPGA).

For example, the second processor 139 may maintain an inactive state in the low power mode of the electronic apparatus 100. The second processor 130 may perform a booting operation based on the trigger signal received from the first processor 120, and convert an inactive state to an active state.

The second processor 130 may perform various functions by executing computer executable instructions stored in the memory 131 that is provided on or in the second processor 130. For instance, the second processor 130 may perform a booting operation by executing instructions, data, etc. stored in the memory 131. The data stored in the memory 131 may include, for example, a boot loader, kernel data, etc.

The memory 131 according to an embodiment may be implemented as a volatile memory (e.g., dynamic RAM (DRAM), static RAM (SRAM), synchronous dynamic RAM (SDRAM), etc.). Meanwhile, this is only an example, and the memory 131 is not limited thereto. For instance, the memory 131 may be implemented as at least one of a flash memory (e.g., NAND flash, NOR flash, etc.), a hard drive, or a solid state drive (SSD), and in the case of a memory detachable from the electronic apparatus 100, the memory 131 maybe implemented as a memory card (e.g., compact flash (CF), secure digital (SD), micro secure digital (Micro-SD), mini secure digital (Mini-SD), extreme digital (xD), multi-media card (MMC), etc.), an external memory (e.g., a USB memory) connectable to a USB port, etc.

The memory 131 according to an embodiment may load and store a set of instructions for system booting, which are stored in an ROM (not illustrated) under the control of the second processor 130. For instance, if power is supplied to the second processor 130 as a trigger signal is received from the first processor 120, the second processor 130 may copy kernel data, O/S, etc. in the memory 131 according to the instructions stored in the ROM and perform a booting operation. When the booting is completed, the second processor 130 may copy various application programs for performing speech recognition regarding the sound signal 10 in the memory 131, and perform speech recognition by executing the copied application programs.

The volatile memory must be supplied with power continuously in order to store data. If the power supply is cut off, the data stored in the volatile memory may be volatilized or corrupted. The memory 131 according to an embodiment may be supplied with power even when the second processor 130 is in an inactive state according to the low power mode of the electronic apparatus 100.

The second processor 130 according to an embodiment may include a circuit for providing power to the memory 131 when the second processor 130 is in an inactive state. Such a circuit may supply power to the memory 131 so that the data stored in the memory is maintained while the second processor 130 is in an inactive state.

The second processor 130 according to an embodiment may omit the step of loading booting data (e.g., a boot loader, kernel data, etc.) and storing the same in the memory 131 based on the instructions stored in the ROM according to the trigger signal.

For instance, as power is supplied while the second processor 130 is in an inactive state, the booting data stored in the volatile memory may not be corrupted (or volatilized). When power is supplied according to the trigger signal, the second processor 130 may complete a booting operation based on the booting data stored in the volatile memory 131, and perform speech recognition regarding the sound signal 10 received through the microphone 110.

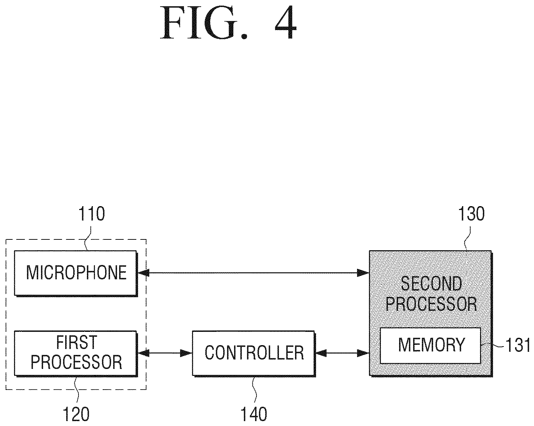

The electronic apparatus 100 according to an embodiment may further include a controller (not illustrated) connected to the first processor 120 and the second processor 130. When receiving the trigger signal from the first processor 120, the controller may transmit a signal for activating the second processor 130 to the second processor 130, which will be described in detail with reference to FIG. 4.

FIG. 4 is a diagram illustrating an example low power mode according to an embodiment.

The controller (e.g., including processing circuitry) 140 according to an embodiment may be connected to the first processor 120 and the second processor 130. The controller 140 may be implemented as various types of integrated circuits which are distinguished from the first processor 120 and the second processor 130.

Referring to FIG. 4, the electronic apparatus 100 according to an embodiment may be configured such that power is supplied to the microphone 110, the first processor 120, the controller 140, and the memory 131 provided on the second processor 130 in the low power mode, and the second processor 130 may be in an inactive state.

For instance, in a case where the second processor 130 is in an inactive state and is not supplied with power from a battery, etc. provided on the electronic apparatus 100, the controller 140 may supply power to the memory 131 provided on the second processor 130.

The second processor 130 according to an embodiment may be supplied with power as it receives a trigger signal from the first processor 120 provided on the electronic apparatus 100.

In another example, the second processor 130 may be supplied with power under the control of the controller 140 which receives a trigger signal from the first processor 120. For instance, if a trigger signal is received from the first processor 120 as the sound signal 10 is sensed, the controller 140 may transmit a signal for booting (or activating) the second processor 130 to the second processor 130. For example, the controller 140 may generate a signal for supplying power to the second processor 130 which has been inactivated in the low power mode of the electronic apparatus 100. In another example, the controller 140 may transmit a trigger signal received from the first processor 120 to the second processor 130. The second processor 130 may be converted from an inactive state to an active state based on the trigger signal received from the controller 140.

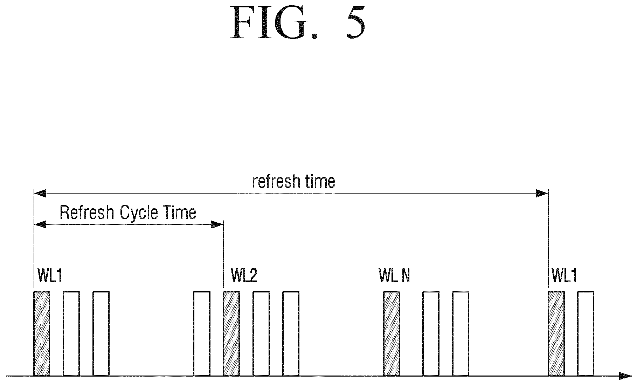

Referring back to FIG. 2, the second processor 130 according to an embodiment may be converted to an active state based on the booting data which is maintained (or stored) in the memory 131 even in the low power mode of the electronic apparatus 100, which will be described in detail with reference to FIG. 5.

FIG. 5 is a diagram illustrating an example in which a memory is supplied with power according to an embodiment.

Referring to FIG. 5, the electronic apparatus 100 may prevent data stored in the memory 131 from being corrupted (or volatilized) based on a retention time and a refresh time.

The data stored in the volatile memory may be damaged or volatilized when the power supply to the volatile memory is cut off or the power is not recharged. When the power supply to the volatile memory is suspended as the electronic apparatus 100 is turned off, the data stored in the volatile memory is not maintained. During the turn-on of the electronic apparatus 100 or the booting operation of the second processor 130, the operation of loading booting data onto the memory 131 should be preceded. After the second processor 130 loads the booting data onto the memory 131, the time required for executing the booting data and completing the booting operation may be relatively long.

If the starting point of the sound signal 10 sensed from the microphone 110 is received before the booting operation of the second processor 130 is completed, there is a problem that the second processor 130 should perform speech recognition based only on the remaining sound signal 10 except part of the starting point of the sound signal 10.

The electronic apparatus 100 according to an embodiment may prevent the booting data stored in the memory 131 from being damaged (or volatilized) by supplying power to the memory 131 provided on the second processor 130 even when the second processor 130 is in an inactive state (or when the electronic apparatus 100 is in the low power mode).

Referring to FIG. 5, the second processor 130 may supply power to the memory 131 so that the data stored in the memory 131 can be maintained by performing a memory refresh or RAM refresh operation. The volatile memory according to an embodiment may be configured of a matrix of a memory cells, and may have a retention time to maintain the data stored in each memory cell. The volatile memory may perform a refresh operation to maintain the stored data periodically within the retention time. For example, the electronic apparatus 100 may charge each of a plurality of memory cells constituting the memory 131 by applying voltage sequentially based on a refresh cycle time. Even if the memory cells are electrically charged, it is discharged due to the leakage of current when time elapses, and the electronic apparatus 100 may perform a refresh operation for the memory 131 periodically even in the second processor 131 is in an inactive state in order to prevent and/or reduce the data from being damaged or volatilized.

Referring to FIG. 5, if there are N word lines in the memory 131, the refresh cycle time may be the refresh time/N.

The memory 131 according to an embodiment may include a circuit for performing a self-refresh operation without the controller 140 or the control of an external circuit. The memory 131 may perform a refresh operation with respect to each of a plurality of memory cells periodically using the self-refresh circuit, and maintain the data stored in the memory 131 in the low power mode of the electronic apparatus 100.

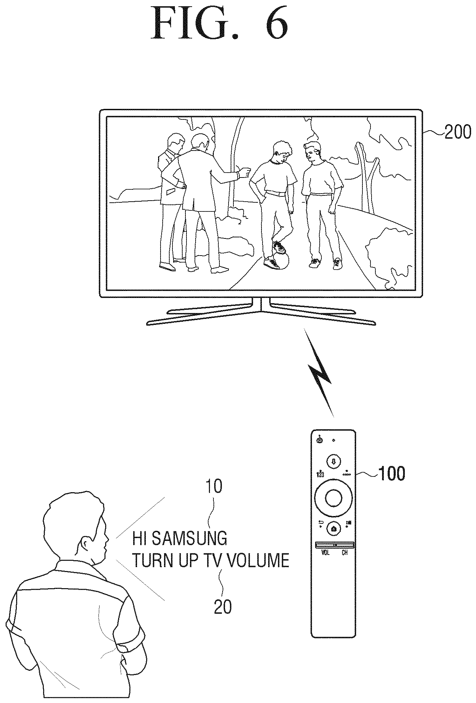

Referring back to FIG. 2, the electronic apparatus 100 according to an embodiment may further comprise a communication interface (not illustrated) including circuitry. If the electronic apparatus 100 is implemented as a remote controller to control the external device 200, the second processor 130 may perform speech recognition regarding the sound signal 10, and may control the communication interface to transmit a user command obtained based on the speech recognition to the external device 200, which will be described in greater detail below with reference to FIG. 6.

FIG. 6 is a illustrating an example operation of an electronic apparatus according to an embodiment.

Referring to FIG. 6, the electronic apparatus 100 may be implemented as a remote controller for controlling the external device 200 such as a TV. It will be understood that this is only an example, and the electronic apparatus 100 may be implemented as various types of devices such as an AI speaker that performs communication with the external device 200, a user terminal device, and the like.

As the sound signal 10 is sensed, the electronic apparatus 100 may perform speech recognition with respect to the sound signal 10 using the second processor 130, and may obtain a user command from the recognized speech. According to an embodiment, if the sound signal 10 is sensed, the first processor 120 which maintains its active state even in the low power mode may transmit a trigger signal to the second processor 130, and the second processor 130 may complete booting based on the booting data stored in the memory 131. The second processor 130 may perform speech recognition regarding the sound signal 10.

The second processor 130 according to an embodiment may obtain a text corresponding to the sound signal 10 based on the speech recognition, and may obtain a user command based on the obtained text. For instance, the second processor 130 may obtain a text (e.g., turn up TV volume) by performing speech recognition regarding the sound signal 10 by itself. For instance, the second processor 130 may obtain text information corresponding to the sound signal 10 by applying, for example, a Speech to Text (STT) function. The processor 130 may control the communication interface to transmit a user command for controlling the external device 200 corresponding to the text to the external device 200.

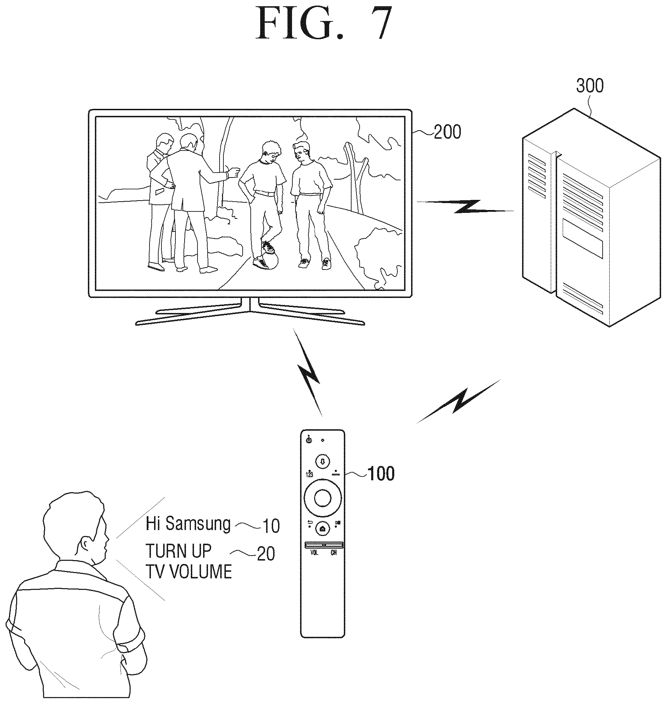

In another example, the second processor 130 may control the communication interface to transmit the sound signal 10 to an external server that performs speech recognition. The second processor 130 may control the communication interface to transmit the user command received from the external server to the external device 200. In another example, an external server 300 (see, e.g., FIG. 7) may convert the sound signal 10 received from the electronic apparatus 100 by applying STT, and transmit the converted text to the electronic apparatus 100. The second processor 130 may control the communication interface to transmit a user command (or a control signal) corresponding to the text to the external device 200.

According to another embodiment (see, e.g., FIG. 7), it may be assumed that the electronic apparatus 100 is limited in communication with an external server 300 which performs speech recognition. In this case, the electronic apparatus 100 may perform communication with the external device 200, and obtain a user command corresponding to the sound signal 10 through the external device 200. For instance, the electronic apparatus 100 may transmit the sound signal 10 or a text corresponding to the sound signal 20 to the external device 200. The external device 200 may obtain a user command corresponding to the sound signal 10 by performing communication with the external server 300, or obtain a user command corresponding to the received text 20. The external device 200 may operate according to the obtained user command. Even if the electronic apparatus 100 is limited in communication with the external server 300, the electronic apparatus 100 may transmit the second sound signal 20 and a control command to the external device 200 so that the external device 200 obtains a user command corresponding to the sound signal 20 from the external server.

The user command may, for example, be a command (or a control signal) for controlling an external electronic apparatus. For instance, if the obtained text is a trigger word for entering a speech recognition mode, the electronic apparatus 100 may enter the speech recognition mode or transmit a control command for allowing the external device 200 to enter the speech recognition mode to the external device 200.

The speech recognition mode may refer, for example, to a mode for controlling the electronic apparatus 100, the external device 200, etc. with a user's spoken voice. For instance, the electronic apparatus 100 or the external device 200 may not be controlled by a button and the like provided on the electronic apparatus 100, but the electronic apparatus 100 or the external device 200 may be controlled based on a user voice when the electronic apparatus 100 enters the speech recognition mode.

The trigger word may be referred to as a wake up word and the like. Hereinafter, it will be referred to as a trigger ward for convenience of explanation. The trigger word may be preset at the manufacturing stage of the electronic apparatus 100, or editing such as addition, deletion, etc. may be performed according to a user's setting. In another example, the trigger word may be changed or added through firmware update, etc. In addition, the trigger word may be a preset word of four syllables for activating the speech recognition mode, but is not limited thereto.

Referring back to FIG. 2, if it is identified that a trigger word is included in the sound signal 10, the second processor 130 may enter the speech recognition mode. The second processor 130 may transmit the received sound signal to the external server which performs the speech recognition, which will be described in greater detail below with reference to FIG. 7.

FIG. 7 is a diagram illustrating an example in which an electronic apparatus that performs communication with an external device according to an embodiment.

Referring to FIG. 7, the second processor 130 according to an embodiment is converted to be in an active state according to a trigger signal, and may perform speech recognition with respect to the sound signal 10. If it is identified that the trigger word (e.g., Hi, Samsung) is included in the sound signal 10, the second processor 130 may enter the speech recognition mode.

The second processor 130 according to an embodiment may transmit the received sound signal to the external server 300, and receive a control command for controlling the electronic apparatus 100 or the external device 200 corresponding to the sound signal from the external server 300.

For instance, if the sound signal 10 including a trigger word and the sound signal 20 corresponding to a spoken voice for controlling the external device 200 are received, the second processor 130 may enter the speech recognition mode based on the sound signal 10 including the trigger word and transmit the sound signal 20 corresponding to the spoken voice to the external server 300. The electronic apparatus 100 may receive a control command corresponding to the spoken voice for controlling the external device 200 from the external server 300. The electronic apparatus 100 may transmit the control command to the external device 200.

This is only an example, and an embodiment is not limited thereto. For instance, the processor 130 may obtain text information included in the sound signals 10, 20 by applying, for example, a Speech To Text (STT) function. Subsequently, a control command corresponding to the obtained text information may be obtained.

In another example, the second processor 130 may transmit the sound signals 10, 20 to the external server 300, and receive text information corresponding to the sound signals 10, 20 from the external server 300. Subsequently, the second processor 130 may obtain a control command corresponding to the text information received from the external server 300, and transmit the obtained control command to the external device 200.

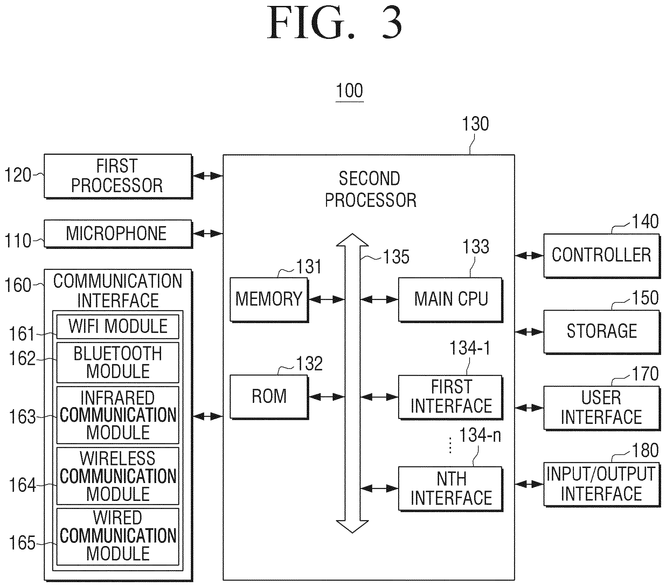

FIG. 3 is a block diagram illustrating an example configuration of an example electronic apparatus according to an embodiment.

Referring to FIG. 3, the electronic apparatus according to an embodiment may include the microphone 110, the first processor (e.g., including processing circuitry) 120, the second processor (e.g., including processing circuitry) 130, the controller (e.g., including processing circuitry) 140, a storage 150, a communication interface (e.g., including communication circuitry) 160, a user interface (e.g., including interface circuitry) 170, and an input/output interface (e.g., including input/output circuitry) 180.

The detailed description of the components which are overlapped with those illustrated in FIG. 2 among the components in FIG. 3 may not be repeated here.

The microphone 110 is configured to detect a sound and convert the sound into an electrical signal. The microphone 110 according to an embodiment may include, for example, and without limitation, an amplifier and amplify (or reduce) the signal based on a predetermined gain value.

For example, the microphone 110 according to an embodiment may be implemented as either a piezoelectric microphone using a piezoelectric effect or a crystal microphone. The piezoelectric effect may refer, for example, to an effect of generating positive (+) and negative (-) electrodes on the front and rear surfaces of the crystal when the diaphragm vibrates according to the vibration of sound waves. This is only an example, and the piezoelectric effect is not limited thereto. For example, the microphone 110 may, for example, be implemented as the microphone 110 using a captive method.

The second processor 130 may include various processing circuitry and control the overall operations of the electronic apparatus 100. For instance, the second processor 130 may drive an operating system and applications to control a plurality of hardware or software components connected to the second processor 130, and may perform various data processing and operations. The processor 130 controls the overall operations of the electronic apparatus 100 using various programs stored in the storage 150. For example, the second processor 130 may perform speech recognition regarding the received sound signal 10.

The second processor 130 may include a memory 131, a ROM 132, a main CPU 133, first to nth interfaces 134-1∼134-n, and a bus 135.

The memory 131, the ROM 132, the main CPU 133 and the first to nth interfaces 134-1∼134-n may be connected through the bus 135.

The ROM 132 may store a set of commands for system booting. When a turn-on command is input and power is supplied, the main CPU 133, according to a command stored in the ROM 132, copies O/S stored in the storage 150 to the memory 131, and executes O/S to boot the system. If the booting is completed, the main CPU 133 copies various application programs stored in the storage 150 to the memory 131 and executes the application programs copied to the memory 131, thereby performing various operations. The second processor 130 may maintain the booting data stored in the memory 131 by performing a refresh operation. In this case, the second processor 130 may perform booting based on the booting data stored in the memory 131.

The main CPU 133 accesses the memory 131 to perform booting using the OS stored in the memory 131. In addition, the CPU 133 may perform various operations using various programs, content data, etc. which are stored in the storage 150.

The first to n-th interfaces 134-1 to 134-n are connected with the above-described various components. One of the interfaces may be network interface which is connected to an external device via a network.

The second processor 130 may perform a graphic processing function (a video processing function). For example, the second processor 130 generate a screen including various objects such as an icon, an image, a text, etc. using a calculator (not shown) and a renderer (not shown). The operator (not illustrated) may operate attribute values, such as coordinate values at which each object will be represented, forms, sizes, and colors according to a layout of the screen, based on the received control instruction. The renderer (not illustrated) may generate screens of various layouts including the objects based on the attribute values which are operated by the operator (not illustrated). In addition, the second processor 130 may perform various image processing processes such as decoding, scaling, noise filtering, frame rate conversion, and resolution conversion on audio data.

The second processor 130 may perform processing on audio data. For example, the second processor 130 may perform various processing such as, for example, and without limitation, decoding, amplification, noise filtering, or the like, with respect to audio data.

The storage 150 may store various data such as an operating system (O/S) software module for driving the electronic apparatus 100, and various data like various kinds of multimedia contents.

The storage 150 may be implemented in the form of an internal memory such as a ROM included in the processor (e.g., electrically erasable programmable read-only memory (EEPROM), RAM, etc., or may be implemented as a memory separate from the processor 120. In this case, the storage 150 may be implemented in the form of a memory embedded in the electronic apparatus 100 according to the data storage use, or may be implemented in the form of a memory detachable from the electronic apparatus 100. For example, in the case of data for driving the electronic apparatus 100, the data may be stored in the memory embedded in the electronic apparatus 100, and in the case of data for extending the functions of the electronic apparatus 100, the data may be stored in a memory detachable from the electronic apparatus 100. Meanwhile, the memory embedded in the electronic apparatus may be implemented as at least one of a volatile memory (e.g.: a dynamic RAM (DRAM), a static RAM (SRAM) or a synchronous dynamic RAM (SDRAM), etc.) or a non-volatile memory (e.g.: an one time programmable ROM (OTPROM), a programmable ROM (PROM), an erasable and programmable ROM (EPROM), an electrically erasable and programmable ROM (EEPROM), a mask ROM, a flash ROM, a flash memory (e.g.: NAND flash or NOR flash, etc.), a hard drive or a solid state drive (SSD)). The memory detachable from the electronic apparatus may include a memory card (e.g., compact flash (CF), secure digital (SD), micro secure digital (Micro-SD), mini secure digital (Mini-SD), extreme digital (xD), multi-media card (MMC), etc.), an external memory that can be connected to a USB port (e.g., a USB memory), etc.

For example, the storage 150 may store a noise extraction algorithm for performing noise filtering and echo canceling. The processor 130 may extract the noise of the sound signal 10 using the noise extraction algorithm and perform speech recognition regarding the sound signal 10.

The communication interface 160 may include various communication circuitry and is configured to perform communication with various types of external devices according to various types of communication methods. The communication interface 160 may include various modules including various communication circuitry, such as, for example, and without limitation, a WiFi module 161, a Bluetooth module 162, an infrared communication module 163, a wireless communication module 164, a wired communication module, etc. The second processor 130 may perform communication with various external devices using the communication interface 160. The external device 200 may include, for example, and without limitation, a display device such as a TV, an image processing device such as a set-top box, a control device such as an external server, a remote controller, an audio output device such as a Bluetooth speaker, a home appliance such as a lighting device, a smart cleaner, a smart refrigerator, a server such as IoT home manager, etc.

The WiFi module 161 and the Bluetooth module 162 perform communication according to a WiFi method and a Bluetooth method, respectively. In the case of using the WiFi method or the Bluetooth method, various connection information such as SSID and a session key may be transmitted/received first for communication connection and then, various information may be transmitted/received.

The infrared communication module 163 performs communication according to an infrared Data Association (IrDA) technology that transmits data wirelessly at a short distance using infrared rays between the visible ray and the millimeter wave.

The wireless communication module 164 may include at least one communication chip that performs communication according to various wireless communication standards such as zigbee, 3rd Generation (3G), 3rd Generation Partnership Project (3GPP), Long Term Evolution (LTE), LTE advanced (LTE-A), 4th Generation (4G), 5th Generation (5G), and the like.

In addition, the communication interface 160 may include at least one of a wired communication module 165 performing communication using at least one of a Local Area Network (LAN) module or an Ethernet module and at least one of a pair cable, a coaxial cable, an optical fiber cable, and the like.

The communication interface 160 according to an embodiment may use the same communication module (e.g., a WiFi module) to communicate with an external device such as a remote controller and an external server.

The communication interface 160 according to an embodiment may use a different communication module (e.g., a WiFi module) to communicate with an external device such as a remote controller and an external server. For example, the communication interface 160 may use at least one of an Ethernet module or a WiFi module to communicate with an external server, and use a BT module to communicate with an external device such as a remote controller. However, this is only an example, and the communication interface 160 may use at least one communication module from among various communication modules if it communicates with a plurality of external devices or external servers.

According to an embodiment, the communication interface 160 may perform communication with an external device such as a remote controller and an external server. For instance, the communication interface 160 may receive a user's spoken voice from an external device including a microphone. In this case, the received user's spoken voice or voice signal may be a digital voice signal, but may be an analog voice signal depending on the embodiments of implementation. For example, the electronic apparatus may receive a user voice signal through a wireless communication method such as Bluetooth, WiFi, and the like. The external device may be implemented as a remote controller or a smart phone. According to an embodiment, the external device may install or remove applications to control the electronic apparatus 100 according to the purpose of the manufacturer or under the control of the user. For instance, the smart phone may install a remote controller application to control the electronic apparatus 100. A user voice is received through a microphone provided on the smart phone, and a control signal corresponding to the received user voice may be obtained through the remote control application and transmitted to the electronic apparatus 100. This is only an example, and an embodiment is not necessarily limited thereto. For example, the smart phone may transmit the user voice received from the smart phone to a speech recognition server, obtain a control signal corresponding to the user voice from the speech recognition server, and transmit the obtained control signal to the electronic apparatus 100.

The electronic apparatus 100 may transmit the corresponding voice signal to an external server in order to perform speech recognition of the voice signal received from the external device. The communication interface 160 may perform communication with the external server to receive the property information of the sound signal collected through the microphone 110, text information included in the sound signal, and the like.

The communication module for communication with the external device and the external server may be implemented as one or separately. For example, communication with the external device may be performed using a Bluetooth module, and communication with the external server may be performed using an Ethernet modem or a WiFi module.

The electronic apparatus 100 according to an embodiment may transmit the received digital voice signal and sound signal to the speech recognition server. The speech recognition server may convert the sound signal into text information using STT. The speech recognition server may transmit the text information to another server or the electronic apparatus in order to perform a search corresponding to the text information, and may perform a search directly in some cases.

The user interface 170 may include various interface circuitry, such as, for example, and without limitation, a button, touch pad, mouse and keyboard, or the like, or may be implemented as a touch screen that can also perform the function of the display and a manipulation input function. The button may include various types of buttons, such as, for example, and without limitation, a mechanical button, a touch pad, a wheel, etc., which are formed on the front, side, or rear of the exterior of a main body.

The input/output interface 180 may include various input/output circuitry including, for example, and without limitation, one of High Definition Multimedia Interface (HDMI), Mobile High-Definition Link (MHL), Universal Serial Bus (USB), Display Port (DP), Thunderbolt, Video Graphics Array (VGA) port, RGB port, D-subminiature (D-SUB), Digital Visual Interface (DVI), or the like.

The input/output interface 180 may input/output at least one of a video signal and an audio signal.

Depending on embodiments, the input/output interface 180 may include a port for inputting/outputting only an audio signal and a port for inputting/outputting only a video signal separately, or may be implemented as one port for inputting/outputting both an audio signal and a video signal. Meanwhile, the electronic apparatus 100 may be implemented as a device that does not include a display, and may transmit an image signal to a separate display device.

The display (not illustrated) may be implemented as various types of displays such as, for example, and without limitation, Liquid Crystal Display (LCD), Organic Light Emitting Diodes (OLED) display, Plasma Display Panel (PDP), etc. The display may include a driving circuit, a backlight unit and the like which may be implemented in the form of a-si TFT, low temperature poly silicon (LTPS) TFT, organic TFT (OTFT), etc. Meanwhile, the display may be implemented as a touch screen combined with a touch sensor, a flexible display, a 3D display and the like.

In addition, according to an embodiment, the display may include not only a display panel for outputting an image but also a bezel for housing the display panel. For example, the bezel according to an embodiment may include a touch sensor (not illustrated) for sensing a user interaction.

A speaker (not illustrated) performs the function of outputting an audio signal. For instance, the speaker may include at least one speaker unit (or audio amplifier).

For example, the speaker may include at least one of a woofer speaker, a midrange speaker and a tweeter speaker. However, the speaker is not limited thereto, and it may output sound signals of various sound bands using a plurality of speakers.

The electronic apparatus 100 may further include a tuner and a demodulator according to an embodiment.

A tuner (not illustrated) may receive an Radio Frequency (RF) broadcast signal by tuning channels selected by a user among RF broadcast signals received via an antenna or pre-stored all channels.

A demodulator (not illustrated) may receive and demodulate the digital IF signal (DIF) converted by the tuner, and perform channel decoding.

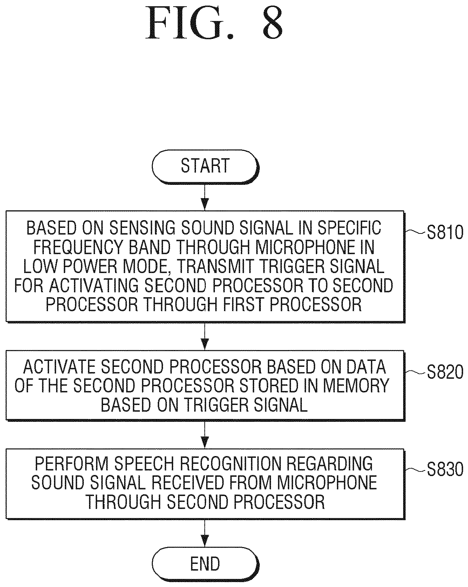

FIG. 8 is a flowchart illustrating an example method of controlling an electronic apparatus according to an embodiment.

Referring to FIG. 8, the method of controlling an electronic apparatus including a microphone, a first processor for maintaining an active state in a low power mode of the electronic apparatus, and a second processor for maintaining an inactive state in the low power mode, comprises transmitting a trigger signal to the second processor through the first processor to activate the second processor based on a sound signal of a specific frequency band being sensed through the microphone in the low power mode (S810).

The second processor is activated based on the data stored in a memory of the second processor based on the trigger signal (S820).

Speech recognition is performed regarding the sound received from the microphone through the second processor (S830). The memory may be a memory which is supplied with power in the low power mode of the electronic apparatus.

The memory according to an embodiment is a volatile memory, and the second processor may include a circuit for supplying power to the memory in an inactive state. The controlling method according to an embodiment may further include supplying power to the memory so that the data stored in the memory is maintained while the second processer is in an inactive state through a circuit.

The data stored in the memory may be booting data used to convert the second processor to be in an active state.

In addition, the step S810 of transmitting a trigger signal to the second processor may include, based on a trigger signal being received through a controller connected to the first processor and the second processor, transmitting a signal to activate the second processor to the second processor.

The method according to an embodiment may include supplying power to the memory through a controller in the low power mode.

In addition, the sound signal of a specific frequency band may be a sound signal of 100Hz to 500Hz.

The microphone according to an embodiment may be implemented as one of a piezoelectric microphone or a crystal microphone.

The electronic apparatus according to an embodiment may include a noise extraction algorithm for performing noise filtering and echo canceling, and the step S830 of performing speech recognition may include extracting noise of the sound signal using the noise extraction algorithm and performing speech recognition.

The electronic apparatus according to an embodiment may be a remote controller for controlling an external device remotely, and a controlling method according to an embodiment may include transmitting a user command obtained based on speech recognition to the external device.

The method according to an embodiment may include, based on identifying that a trigger word is included in the sound signal, entering the speech recognition mode and transmitting the received sound signal to the external server that performs speech recognition.

The methods according to the above-described various example embodiments may be implemented in the form of an application installable in the existing electronic apparatus.

In addition, the methods according to the above-described various example embodiments may be implemented through software upgrade or hardware upgrade of the existing electronic apparatus.

Further, the above-described various example embodiments may be performed through an embedded server included in the electronic apparatus, or at least one external server of the electronic apparatus and the display device.

Meanwhile, according to an embodiment, the above-described various example embodiments may be implemented as software including one or more instructions stored in a storage medium which can be read by machine (e.g., a computer). For instance, the machine may call at least one instruction from among the stored one or more instructions from the storage medium and perform an operation according to the instruction, and may include an electronic apparatus according to embodiments. When the instruction is executed under the control of the processor, the processor directly or using other components under the control of the processor may perform a function corresponding to the instruction. The one or more instructions may include a code made by a complier or a code executable by an interpreter. The storage medium which can be read by machine may be provided in the form of a non-transitory storage medium. Where the 'non-transitory' storage medium is a tangible device and does not include a signal, and this term is not used to distinguish a case where data is stored in the storage medium semi-permanently and a case where data is stored temporarily.

According to an embodiment, a method according to the various embodiments may be included in a computer program product and provided therein. The computer program product can be traded between a seller and a buyer as a product. The computer program product may be distributed in the form of a storage medium that can be read by machine (e.g., compact disc read only memory (CD-ROM), or may be distributed online (e.g., downloaded or uploaded) through an application store (e.g., PlayStore™) or directly between two user devices. In the case of online distribution, at least a portion of the computer program product may be at least temporarily stored in a storage medium such as a memory of a server of a manufacturer, a server of an application store, or a relay server, or may be temporarily generated.

In addition, according to an example embodiment, various embodiments described above may be read by a computer or a similar device using software, hardware, or a combination thereof. It can be implemented in a recording medium. In some cases, the embodiments described herein may be implemented by the processor itself. According to the software implementation, embodiments such as the procedures and functions described herein may be implemented as separate software modules. Each of the software modules may perform one or more functions and operations described herein.

Meanwhile, the computer instructions to perform processing operations of a device according to the above-described various embodiments may be stored in a non-transitory computer-readable medium. The computer instructions stored in the non-transitory computer readable medium allow the specific device to perform processing operations in the device according to the above-described various embodiments when executed by the processor of the specific device.

The respective components (e.g., module or program) according to the various example embodiments may include a single entity or a plurality of entities, and some of the corresponding sub-components described above may be omitted, or another sub-component may be further added to the various example embodiments. Alternatively or additionally, some components (e.g., module or program) may be combined to form a single entity which performs the same or similar functions as the corresponding elements before being combined. Operations performed by a module, a program, or other component, according to various example embodiments, may be sequential, parallel, or both, executed iteratively or heuristically, or at least some operations may be performed in a different order, omitted, or other operations may be added.

The foregoing example embodiments and advantages are merely examples and are not to be understood as limiting the present disclosure. The present teaching may be readily applied to other types of devices. The description of the example embodiments of the present disclosure is intended to be illustrative, and not to limit the scope of the claims, and many alternatives, modifications, and variations will be apparent to those skilled in the art.

## Claims

1. An electronic apparatus, comprising:
a microphone (110);
a first processor (120) operatively coupled to the microphone and configured to maintain an active state in a low power mode of the electronic apparatus; and
a second processor (130) configured to maintain an inactive state in the low power mode,
wherein the first processor, based on sensing a sound signal in a specific frequency band through the microphone in the low power mode, is configured to control the electronic apparatus to transmit a trigger signal to the second processor to activate the second processor, and
the electronic apparatus is **characterised in that** the second processor includes a memory (131) configured to receive power in the low power mode, the second processor configured to be activated based on data stored in the memory based on the trigger signal, and to perform speech recognition regarding the sound signal received from the microphone.

2. The apparatus as claimed in claim 1, wherein the memory comprises a volatile memory,
wherein the second processor comprises a circuit configured to supply power to the memory in the inactive state.

3. The apparatus as claimed in claim 2, wherein the data stored in the memory includes booting data used to convert the second processor to an active state.

4. The apparatus as claimed in claim 1, further comprising:
a controller connected to the first processor and the second processor,
wherein the controller is configured to transmit a signal to the second processor to activate the second processor based on receiving the trigger signal.

5. The apparatus as claimed in claim 4, wherein the controller is configured to supply power to the memory in the low power mode.

6. The apparatus as claimed in claim 1, wherein the specific frequency band is a 100Hz to 500Hz band.

7. The apparatus as claimed in claim 1, wherein the microphone comprises one of a piezoelectric microphone or a crystal microphone.

8. The apparatus as claimed in claim 1, further comprising:
a storage configured to store a noise extraction algorithm for performing noise filtering and echo canceling,
wherein the second processor is configured to perform the speech recognition based on extracting a noise of the sound signal using the noise extraction algorithm.

9. The apparatus as claimed in claim 1, further comprising:
a communication interface including a circuit,
wherein the electronic apparatus includes a remote controller configured to control an external device, and
wherein the second processor is configured to control the communication interface to transmit a user command obtained based on the speech recognition to the external device.

10. The apparatus as claimed in claim 1, further comprising:
a communication interface including a circuit,
wherein the second processor is configured to enter a speech recognition mode and to control the communication interface to transmit a received sound signal to an external server that performs the speech recognition based on identifying that the sound signal includes a trigger word.

11. A method of controlling an electronic apparatus including a microphone, a first processor operatively coupled to the microphone and configured to maintain an active state in a low power mode of the electronic apparatus, and a second processor configured to maintain an inactive state in the low power mode, the method comprising:
transmitting a trigger signal to the second processor activate the second processor based on sensing a sound signal in a specific frequency band through the microphone in the low power mode; the method being **characterised by**:
activating the second processor based on data stored in a memory provided in the second processor based on the trigger signal; and
performing speech recognition regarding the sound signal received from the microphone through the second processor,
wherein the memory is supplied with power in a low power mode of the electronic apparatus.

12. The method as claimed in claim 11, wherein the memory includes a volatile memory, and
wherein the second processor includes a circuit configured to supply power to the memory in the inactive state,
the method further comprising:
supplying power to the memory through the circuit to maintain data stored in the memory while the second processor is in an inactive state.

13. The method as claimed in claim 12, wherein the data stored in the memory includes booting data used to convert the second processor to an active state.

14. The method as claimed in claim 11, wherein the transmitting the trigger signal to the second processor comprises transmitting a signal to the second processor to activate the second processor based on receiving the trigger signal through a controller connected to the first processor and the second processor,.

15. The method as claimed in claim 14, comprising:
supplying power to the memory through the controller in the low power mode.

## Patentansprüche

1. Elektronische Vorrichtung, die Folgendes umfasst:
ein Mikrofon (110);
einen ersten Prozessor (120), der mit dem Mikrofon operativ gekoppelt und zum Halten eines aktiven Zustands in einem Energiesparmodus der elektronischen Vorrichtung konfiguriert ist; und
einen zweiten Prozessor (130), der zum Halten eines inaktiven Zustands im Energiesparmodus konfiguriert ist,
wobei der erste Prozessor, auf der Basis der Erfassung eines Tonsignals in einem spezifischen Frequenzband durch das Mikrofon im Energiesparmodus, zum Steuern der elektronischen Vorrichtung konfiguriert ist, um ein Triggersignal zum Aktivieren des zweiten Prozessors zu diesem zu übertragen, und
die elektronische Vorrichtung **dadurch gekennzeichnet ist, dass** der zweite Prozessor einen Speicher (131) enthält, der zum Empfangen von Strom im Energiesparmodus konfiguriert ist, wobei der zweite Prozessor zum Aktiviertwerden auf der Basis von im Speicher gespeicherten Daten auf der Basis des Triggersignals und zum Durchführen von Spracherkennung bezüglich des vom Mikrofon empfangenen Tonsignals konfiguriert ist.

2. Vorrichtung nach Anspruch 1, wobei der Speicher einen flüchtigen Speicher umfasst,
wobei der zweite Prozessor eine Schaltung umfasst, die zum Zuführen von Strom zum Speicher im inaktiven Zustand konfiguriert ist.

3. Vorrichtung nach Anspruch 2, wobei die im Speicher gespeicherten Daten Boot-Daten beinhalten, die zum Versetzen des zweiten Prozessors in einen aktiven Zustand benutzt werden.

4. Vorrichtung nach Anspruch 1, die ferner Folgendes umfasst:
eine Steuerung, die mit dem ersten Prozessor und dem zweiten Prozessor verbunden ist,
wobei die Steuerung zum Übertragen eines Signals zum zweiten Prozessor konfiguriert ist, um den zweiten Prozessor auf der Basis des Empfangs des Triggersignals zu aktivieren.

5. Vorrichtung nach Anspruch 4, wobei die Steuerung zum Zuführen von Strom zum Speicher im Energiesparmodus konfiguriert ist.

6. Vorrichtung nach Anspruch 1, wobei das spezifische Frequenzband ein Band von 100 Hz bis 500 Hz ist.

7. Vorrichtung nach Anspruch 1, wobei das Mikrofon ein piezoelektrisches Mikrofon oder ein Kristallmikrofon umfasst.

8. Vorrichtung nach Anspruch 1, die ferner Folgendes umfasst:
einen Speicher, der zum Speichern eines Rauschextraktionsalgorithmus zur Durchführung von Rauschfilterung und Echounterdrückung konfiguriert ist,
wobei der zweite Prozessor zum Durchführen der Spracherkennung auf der Basis der Extraktion eines Rauschens des Tonsignals mittels des Rauschextraktionsalgorithmus konfiguriert ist.

9. Vorrichtung nach Anspruch 1, die ferner Folgendes umfasst:
eine Kommunikationsschnittstelle mit einer Schaltung,
wobei die elektronische Vorrichtung eine Fernsteuerung enthält, die zum Steuern eines externen Geräts konfiguriert ist, und
wobei der zweite Prozessor zum Steuern der Kommunikationsschnittstelle konfiguriert ist, um einen auf der Basis der Spracherkennung erhaltenen Benutzerbefehl zu dem externen Gerät zu übertragen.

10. Vorrichtung nach Anspruch 1, die ferner Folgendes umfasst:
eine Kommunikationsschnittstelle mit einer Schaltung,
wobei der zweite Prozessor zum Eintreten in einen Spracherkennungsmodus und zum Steuern der Kommunikationsschnittstelle konfiguriert ist, um ein empfangenes Tonsignal zu einem externen Server zu übertragen, der die Spracherkennung auf der Basis der Identifizierung durchführt, dass das Tonsignal ein Triggerwort enthält.

11. Verfahren zum Steuern einer elektronischen Vorrichtung mit einem Mikrofon, einem ersten Prozessor, der mit dem Mikrofon operativ gekoppelt und zum Halten eines aktiven Zustands in einem Energiesparmodus der elektronischen Vorrichtung konfiguriert ist, und einem zweiten Prozessor, der zum Halten eines inaktiven Zustands im Energiesparmodus konfiguriert ist, wobei das Verfahren Folgendes beinhaltet:
Übertragen eines Triggersignals zum zweiten Prozessor zum Aktivieren des zweiten Prozessors auf der Basis der Erfassung eines Tonsignals in einem spezifischen Frequenzband durch das Mikrofon im Energiesparmodus; wobei das Verfahren **gekennzeichnet ist durch**:
Aktivieren des zweiten Prozessors auf der Basis von Daten, die in einem im zweiten Prozessor vorgesehenen Speicher gespeichert sind, auf der Basis des Triggersignals; und
Durchführen von Spracherkennung bezüglich des vom Mikrofon empfangenen Tonsignals **durch** den zweiten Prozessor,
wobei der Speicher in einem Energiesparmodus der elektronischen Vorrichtung mit Strom versorgt wird.

12. Verfahren nach Anspruch 11, wobei der Speicher einen flüchtigen Speicher beinhaltet, und
wobei der zweite Prozessor eine Schaltung beinhaltet, die zum Zuführen von Strom zum Speicher im inaktiven Zustand konfiguriert ist,
wobei das Verfahren ferner Folgendes beinhaltet:
Zuführen von Strom zum Speicher durch die Schaltung, um Daten im Speicher gespeichert zu halten, während der zweite Prozessor in einem inaktiven Zustand ist.

13. Verfahren nach Anspruch 12, wobei die im Speicher gespeicherten Daten Boot-Daten enthalten, die zum Versetzen des zweiten Prozessor in einen aktiven Zustand benutzt werden.

14. Verfahren nach Anspruch 11, wobei das Übertragen des Triggersignals zum zweiten Prozessor das Übertragen eines Signals zum zweiten Prozessor beinhaltet, um den zweiten Prozessor auf der Basis des Empfangs des Triggersignals durch eine mit dem ersten Prozessor und dem zweiten Prozessor verbundene Steuerung zu aktivieren.

15. Verfahren nach Anspruch 14, das Folgendes beinhaltet:
Zuführen von Strom zum Speicher durch die Steuerung im Energiesparmodus.

## Revendications

1. Appareil électronique, comprenant :
un microphone (110) ;
un premier processeur (120) fonctionnellement couplé au microphone et configuré pour maintenir un état actif dans un mode à faible puissance de l'appareil électronique ; et
un second processeur (130) configuré pour maintenir un état inactif dans le mode à faible puissance,
dans lequel le premier processeur, basé sur une détection d'un signal sonore dans une bande de fréquences spécifique par le biais du microphone dans le mode à faible puissance, est configuré pour commander l'appareil électronique pour transmettre un signal déclencheur au second processeur pour activer le second processeur, et
l'appareil électronique est **caractérisé en ce que** le second processeur inclut une mémoire (131) configurée pour recevoir une puissance dans le mode à faible puissance, le second processeur étant configuré pour être activé sur la base de données stockées dans la mémoire sur la base du signal déclencheur, et pour réaliser une reconnaissance de la parole concernant le signal sonore reçu du microphone.

2. Appareil selon la revendication 1, dans lequel la mémoire comprend une mémoire volatile,
dans lequel le second processeur comprend un circuit configuré pour alimenter la mémoire dans l'état inactif.

3. Appareil selon la revendication 2, dans lequel les données stockées dans la mémoire incluent des données de démarrage utilisées pour convertir le second processeur dans un état actif.

4. Appareil selon la revendication 1, comprenant en outre :
un dispositif de commande connecté au premier processeur et au second processeur,
dans lequel le dispositif de commande est configuré pour transmettre un signal au second processeur pour activer le second processeur sur la base de la réception du signal déclencheur.

5. Appareil selon la revendication 4, dans lequel le dispositif de commande est configuré pour alimenter la mémoire dans le mode à faible puissance.

6. Appareil selon la revendication 1, dans lequel la bande de fréquences spécifique est une bande de 100 Hz à 500 Hz.

7. Appareil selon la revendication 1, dans lequel le microphone comprend l'un d'un microphone piézoélectrique ou d'un microphone à cristal.

8. Appareil selon la revendication 1, comprenant en outre :
un stockage configuré pour stocker un algorithme d'extraction de bruit pour réaliser un filtrage de bruit et une suppression d'écho,
dans lequel le second processeur est configuré pour réaliser la reconnaissance de la parole sur la base de l'extraction d'un bruit du signal sonore au moyen de l'algorithme d'extraction de bruit.

9. Appareil selon la revendication 1, comprenant en outre :
une interface de communication incluant un circuit,
dans lequel l'appareil électronique inclut un dispositif de commande à distance configuré pour commander un dispositif externe, et
dans lequel le second processeur est configuré pour commander l'interface de communication pour transmettre une instruction d'utilisateur obtenue sur la base de la reconnaissance de la parole au dispositif externe.

10. Appareil selon la revendication 1, comprenant en outre :
une interface de communication incluant un circuit,
dans lequel le second processeur est configuré pour entrer dans un mode de reconnaissance de la parole et pour commander l'interface de communication pour transmettre un signal sonore reçu à un serveur externe qui réalise la reconnaissance de la parole sur la base de l'identification selon laquelle le signal sonore inclut un mot déclencheur.

11. Procédé de commande d'un appareil électronique incluant un microphone, un premier processeur fonctionnellement couplé au microphone et configuré pour maintenir un état actif dans un mode à faible puissance de l'appareil électronique, et un second processeur configuré pour maintenir un état inactif dans le mode à faible puissance, le procédé comprenant :
la transmission d'un signal déclencheur au second processeur pour activer le second processeur sur la base de la détection d'un signal sonore dans une bande de fréquences spécifique par le biais du microphone dans le mode à faible puissance ; le procédé étant **caractérisé par** :
l'activation du second processeur sur la base de données stockées dans une mémoire disposée dans le second processeur sur la base du signal déclencheur ; et
la réalisation d'une reconnaissance de la parole concernant le signal sonore reçu du microphone par le biais du second processeur,
dans lequel la mémoire est alimentée dans un mode à faible puissance de l'appareil électronique.

12. Procédé selon la revendication 11, dans lequel la mémoire inclut une mémoire volatile, et
dans lequel le second processeur inclut un circuit configuré pour alimenter la mémoire dans l'état inactif,
le procédé comprenant en outre :
l'alimentation de la mémoire par le biais du circuit pour maintenir des données stockées dans la mémoire alors que le second processeur est dans un état inactif.

13. Procédé selon la revendication 12, dans lequel les données stockées dans la mémoire incluent des données de démarrage utilisées pour convertir le second processeur dans un état actif.

14. Procédé selon la revendication 11, dans lequel la transmission du signal déclencheur au second processeur comprend la transmission d'un signal au second processeur pour activer le second processeur sur la base de la réception du signal déclencheur par le biais d'un dispositif de commande connecté au premier processeur et au second processeur.

15. Procédé selon la revendication 14, comprenant :
l'alimentation de la mémoire par le biais du dispositif de commande dans le mode à faible puissance.
